# EUROPÄISCHE PATENTSCHRIFT

(11) **EP 0 687 939 B1**
(45) Veröffentlichungstag und Bekanntmachung des Hinweises auf die Patenterteilung: **02.05.2003**
(21) Anmeldenummer: 95109439.0
(22) Anmeldetag: 16.06.1995
(51) Int. Cl.: G02F 1/35, H04J 14/02

(54) **Wellenlängenwandler**
Wavelength converter
Convertisseur de longueur d'onde

(30) Priorität: 17.06.1994 DE 4421346
(43) Veröffentlichungstag der Anmeldung: 20.12.1995
(73) Patentinhaber: ALCATEL, 75008 Paris (FR)
(72) Erfinder: Veith, Gustav, Dr., D-75378 Bad Liebenzell (DE); Pfeiffer, Thomas, Dr., D-70569 Stuttgart (DE)
(74) Vertreter: Schätzle, Albin, Dipl.-Phys.

(56) Entgegenhaltungen:
- EP-A- 0 571 134
- IEEE PHOTONICS TECHNOLOGY LETTERS, Bd. 6, Nr. 1, Januar 1994 NEW YORK US, Seiten 53-55, T.DURHUUS
- JOURNAL OF LIGHTWAVE TECHNOLOGY, Bd. 8, Nr. 5, Mai 1990 NEW YORK US, Seiten 660-666, S. SUZUKI
- DURHUUS T. ET AL.: 'Penalty free all-optical wavelength conversion by SOA's in Mach-Zehnder configuration' ECOC '93 Bd. 2, 12 September 1993 - 16 September 1993, ZURICH, Seiten 129 - 132
- SUZUKI K. ET AL.: '160 Gbit/s single polarisation subpicosecond transform limited pulse signal demultiplexing using ultrafast optical loop mirror including MQW travelling wave semiconductor laser amplifier' ELECTRONICS LETTERS Bd. 30, Nr. 8, 14 April 1994, STEVENAGE, UK, Seiten 660 - 661
- FRIBERG S.R. ET AL.: 'Ultrafast all-optical switching in a dual-core fiber nonlinear coupler' APPLIED PHYSICS LETTERS Bd. 51, Nr. 15, 12 Oktober 1987, USA, Seiten 1135 - 1137

## Beschreibung

Die Erfindung betrifft einen Wellenlängenwandler zum Wandeln eines optischen Signals einer ersten Wellenlänge in ein-optisches Signal einer zweiten Wellenlänge nach dem Oberbegriff des Anspruches 1.

Aus Suzuki et al., Journal of Lightwave Technology, 8, Seite 660-666, 1990 ist ein solcher Wellenlängenwandler bekannt, bei dem einer nichtlinearen optischen Einrichtung über einen ersten Eingang ein Gleichlichtsignal einer ersten Wellenlänge und über einen zweiten Eingang ein nichtkonstantes optisches Signal einer zweiten Wellenlänge zugeführt werde. Am Ausgang des Wandlers tritt ein Signal der ersten. Wellenlänge aus, wenn die optische Leistung des nichtkonstanten Signals am zweiten Eingang einen gewissen Schwellwert erreicht.

Für die Verwendung in einem solchen Wellenlängen wandler geeignete nichtlineare optische Einrichtungen werden z.B. in Durhuus et al., Proceedings ECOC 1993, Seite 129-132 (nichtlineares faseroptisches Mach-Zehnder-Interferometer zur Wellenlängenwandlung), Suzuki et al., Electronics Letters 30, Seite 660-661, 1994 (faseroptisches Ringinterferometer mit Halbleiterlaserverstärker) und Friberg et al. Applied Physics Letters 51, Seite 1135-1137, 1987 (optischer Koppler zum schnellen Schalten von optischen Signalen) offenbart Die Funktionsweise des Wellenlängenwandlers wird im folgenden anhand von Figuren näher erläutert.

Es zeigen:
- Fig. 1: ein schematisches Ausführungsbeispiel eines Wellenlängenwandlers, und
- Fig. 2: ein Anwendungsbeispiel für einen Wellenlängenwandler.

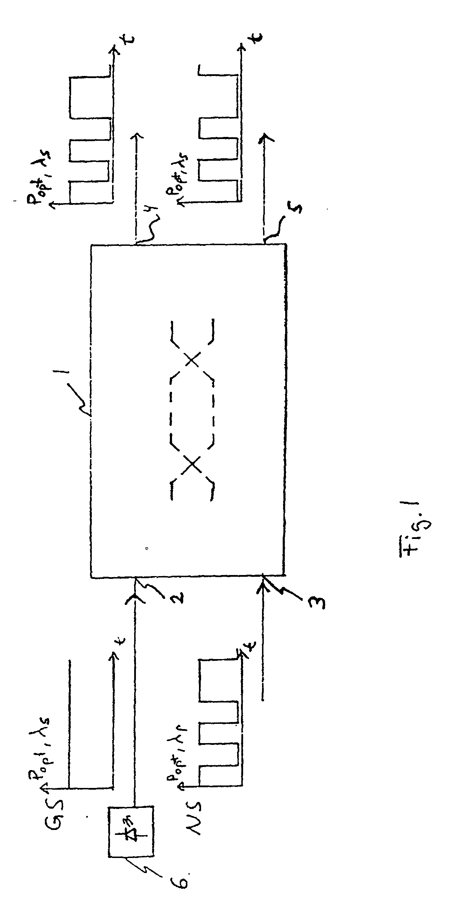

Ein in Fig. 1 gezeigter Wellenlängenwandler besteht aus einer Lichtquelle 6, z.B. einem Laser, und einer nichtlinearen optischen Einrichtung 1, die zwei Eingänge 2,3 und zwei Ausgänge 4,5 hat. Dem ersten Eingang 2 der nichtlinearen optischen Einrichtung 1 wird ein von der Lichtquelle 6 emittiertes Gleichlicht GS einer ersten Wellenlänge λₛ zugeführt und dem zweiten Eingang 3 ein durch eine Nachricht moduliertes Signal NS einer zweiten Wellenlänge λₚ. Dieses Signal wird im folgenden als Nachrichtensignal NS bezeichnet. An dem ersten Ausgang 4 der nichtlinearen optischen Einrichtung 1 tritt ein Signal der ersten Wellenlänge λₛ aus, das durch die Nachricht moduliert ist. Das Nachrichtensignal NS kann z.B. ein Digitalsignal einer bestimmten Bitfolgefrequenz sein.

Desweiteren ist es möglich, daß das Nachrichtensignal NS aus einzelnen Pulsen besteht. Ein beispielhaftes Nachrichtensignal NS und ein Gleichlicht GS sind in der Figur eingezeichnet. Dieses Nachrichtensignal NS hat zwei logische Zustände "0" und "1", die z.B. den beiden logischen Zuständen "Licht ein" und "Licht aus" entsprechen.

Für die nichtlineare optische Einrichtung 1 sind verschiedene, vorzugsweise faseroptische, Ausführungsformen möglich. Im folgenden sind solche Ausführungsformen zum besseren Verständnis aufgeführt:

Ein nichtlineares faseroptisches Mach-Zehnder-Interferometer ist bekannt aus: I.H. White et al, "Demonstration of the Optical Kerr Effect in an All-Fibre Mach-Zehnder Interferometer at Laser Diode Powers", ELECTRONICS LETTERS, 17th March 1988 Vol. 24 No. 6, Seiten 340 bis 341. Ein solches Mach-Zehnder Interferometer besteht u.a. aus zwei Glasfaserzweigen, wobei z.B. in einem nichtlineare optische Eigenschaften genutzt werden. In der Figur ist ein solches Mach-Zehnder Interferometer beispielhaft in die nichtlineare optische Einrichtung 1 eingezeichnet.

Ein nichtlineares faseroptisches Ring-Interferometer (engl.: Nonlinear optical Loop Mirror: NOLM) und ein nichtlineares faseroptisches Ring-Interferometer mit einem nichtlinearen Halbleiterelement sind bekannt aus: M. Eiselt et al, "Multifunktionselement für die optische Signalverarbeitung", ntz Bd. 46 (1993), Heft 11, Seiten 824 bis 830. Solche Ring-Interferometer bestehen u.a. aus einem 2-2 Koppler und einer Glasfaserschleife. In diese Glasfaserschleife ist in einem Fall ein konzentriertes nichtlineares Halbleiterelement eingefügt. Bei diesen Ring-Interferometern läuft jeweils die Hälfte der Leistung rechtsherum und die andere linksherum durch den Faserring. Aufgrund der in der Glasfaser oder in dem Halbleiterelement nichtlinear induzierten Phasendifferenz überlagern sich beim Durchlaufen des Kopplers ihre Feldstärken so, daß sich beide Anteile an einem Tor auslöschen, während sie sich am anderen konstruktiv überlagern.

Ein nichtlinearer faseroptischer Direktional-Koppler ist bekannt aus: Y. Kimura et al, "Fiber-Optic Nonlinear Coherent Coupler", IEEE JOURNAL OF QUANTUM ELECTRONICS, Vol. QE-23, No. 8, August 1987, Seiten 1261 bis 1267. Ein solcher Koppler besteht z.B. aus einer niedrig doppelbrechenden Glasfaser und einem polarisationsselektiven faseroptischen Direktional-Koppler.

Diese nichtlinearen faseroptischen Einrichtungen haben gemeinsam, daß mit ihnen aufgrund des z.B. ebenfalls aus I.H. White et al bekannten Kerr-Effekts ein leistungsabhängiges optisches Schalten möglich ist.

Daraus (I.H. White) ist bekannt,
- daß eine Brechungsindexänderung Δn des nichtlinearen Elements proportional einer in dieses Element eingestrahlten optischen Leistung Pₒₚₜ des Pumpsignals ist, d.h. Δn ∼ Pₒₚₜ, und
- daß eine Phasenverschiebung Δϕ eines transmittierten Lichtsignals proportional der Brechungsindexänderung Δn und umgekehrt proportional der Wellenlänge λ dieses Lichtsignals ist, d.h. Δϕ ∼ Δn/λ,
- daß die Phasenverschiebung Δϕ proportional der optischen Leistung Pₒₚₜ des Pumpsignals ist, d.h. Δϕ ∼ pₒᵤₜ/λ, bzw. Pₒₚₜ ∼ λ • Δϕ.

Bei der Verwendung dieses nichtlinearen Mach-Zehnder Interferometers wird einem Eingang ein Lichtsignal einer Wellenlänge λ und dem anderen Eingang das Pumpsignal zugeführt.

Durch die optische Leistung Pₒₚₜ des Pumpsignals kann somit für das Lichtsignal eine gewünschte Phasenverschiebung Δϕ festgelegt werden.

Bei einer Phasenverschiebung Δϕ = π wird das transmittierte Lichtsignal von dem einen Ausgang des Interferometers zu dessen anderem Ausgang umgeschaltet.

Solche nichtlinearen optischen Einrichtungen haben eine definierte Nullstellung, durch die festgelegt ist, ob und gegebenenfalls an welchem Ausgang das Lichtsignal austritt, wenn die optische Leistung Pₒₚₜ des Pumplichts Null ist. Bei symmetrischem Interferometeraufbau kann das Lichtsignal in der Nullstellung über einen Interferometerausgang ausgekoppelt werden. Symmetrischer Aufbau bedeutet beim Mach-Zehnder Interferometer, daß die Interferometerzweige gleich lang sind. Beim Ring-Interferometer ist automatisch ein symmetrischer Aufbau erfüllt. Es kann durch konstruktive Maßnahmen, z.B. durch die Länge des Verschmelzungsbereichs des zweiten Kopplers des Mach-Zehnder Interferometers, festgelegt sein, an welchem Ausgang das transmittierte Lichtsignal austritt. Es ist aber auch möglich, daß bei Pₒₚₜ = 0 an beiden Ausgängen die optische Leistung Null ist.

Die Funktionsweise des Wellenlängenwandlers wird im folgenden beschrieben:

Bei jedem logischen Zustand "Licht ein" des Nachrichtensignals NS kommt es in der nichtlinearen optischen Einrichtung 1 zu einer Phasenverschiebung Δϕ = π des Nachrichtensignals NS.

Im dargestellten Fall wird dann, wenn die optische Leistung des Nachrichtensignals NS einen vorgegebenen Wert erreicht, das Gleichlicht GS vom zweiten Ausgang 5 auf den ersten Ausgang 4 der nichtlinearen optischen Einrichtung 1 geschaltet, und zwar so lange, wie der logische Zustand "Licht ein" des Nachrichtensignals NS besteht. Beim logischen Zustand "Licht aus" ist die optische Leistung am ersten Ausgang 4 wieder Null.

Bei diesem Wellenlängenwandler wirkt das Nachrichtensignal NS als Steuersignal, durch das das Gleichlicht GS auf den ersten Ausgang 4 der nichtlinearen optischen Einrichtung 1 geschaltet wird. Da dies nur jeweils während der Bitdauer des logischen Zustands "Licht ein" geschieht, tritt am ersten Ausgang 4 ein Signal aus, das die Wellenlänge λₛ des Gleichlichts hat und die Nachricht des Nachrichtensignals beinhaltet.

Dadurch, daß bei jedem logischen Zustand "Licht ein" des Nachrichtensignals das Gleichlicht GS auf den ersten Ausgang 4 geschaltet wird, tritt zu diesen Zeiten am zweiten Ausgang 5 keine optische Leistung des Gleichlichts GS aus.

Am zweiten Ausgang 5 tritt ein Signal der ersten Wellenlänge λ_{S} aus, das dem invertierten Signalverlauf des Signals entspricht, das am ersten Ausgang 4 austritt. In diesem Fall kommt es neben der Wellenlängenwandlung noch zu einer Invertierung des Nachrichtensignals.

In der Figur sind die entsprechenden Signalverläufe an den beiden Ausgängen 4, 5 eingezeichnet. Die optische Leistung Pₒₚₜ des Nachrichtensignals NS muß so groß sein, daß der beschriebene Kerr-Effekt auftritt. Um das zu erreichen, kann die optische Leistung Pₒₚₜ mit einem in der Figur nicht gezeigten steuerbaren optischen Verstärker verstärkt werden.

Ein steuerbarer optischer Verstärker ist z.B. ein mit Erbium-Ionen dotierter faseroptischer Verstärker (EDFA), bei dem die Verstärkung über die optische Pumpleistung steuerbar ist. Solche Verstärker sind hinreichend bekannt.

Die Wellenlängen des Nachrichtensignals und des Gleichlichts können aus einem großen Wellenlängenbereich ausgewählt werden. Eine Wellenlängenwandlung kann innerhalb eines Übertragungsfensters eines Lichtwellenleiters, z.B. von 1532 nm auf 1552 nm, erfolgen. Es ist aber auch möglich, daß die Wandlung zwischen zwei Übertragungsfenstern erfolgt.

Dadurch ist der Wellenlängenwandler vielseitig einsetzbar, z.B. in einer Vermittlungsstelle. Die vorliegende Erfindung nach Anspruch 1 löst nun das Problem, daß ein Nachrichtensignal auf mehrere Teilnehmer verteilt werden soll, die jeweils unterschiedliche Wellenlängen detektieren können. Hierzu muß das Nachrichtensignal nacheinander auf unterschiedliche Wellenlängen umgesetzt werden. Dafür sind mehrere Lichtquellen für Gleichlicht GS unterschiedlicher Wellenlängen zur Verfügung zu stellen. Ein steuerbares optisches Filter, z.B. ein Fabry-Perot Filter, vor dem ersten Eingang 2 läßt nur ein ausgewähltes Gleichlicht durch. Soll das Nachrichtensignal auf eine andere Wellenlänge umgesetzt werden, wird das optische Filter so gesteuert, daß nur das Gleichlicht dieser Wellenlänge durchgelassen wird. Vorteilhafte Ausgestaltungen der Erfindung sind in den Unteransprüchen angegeben.

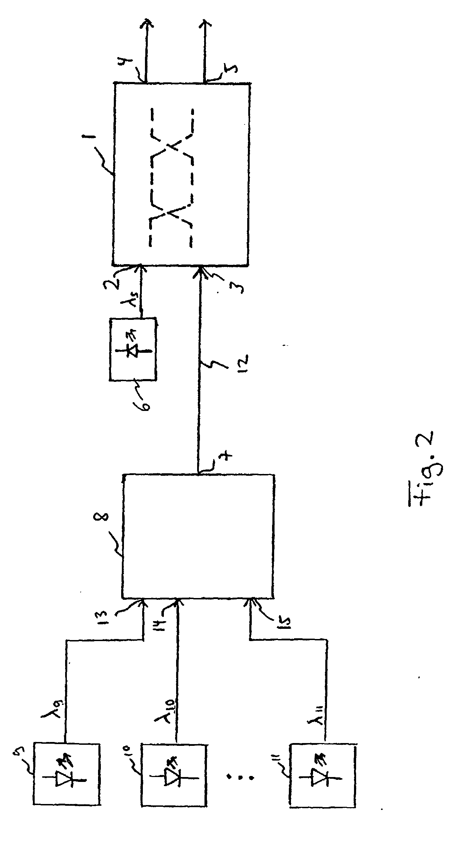

Ein Anwendungsbeispiel eines im vorhergehenden beschriebenen Wellenlängenwandlers nach dem Stand der Technik ist in Fig. 2 gezeigt; dadurch wird ein optisches Multiplexsystem geschaffen. Für den Wellenlängenwandler werden in Fig. 2 die gleichen Bezugszeichen verwendet, wie in Fig. 1. Der Eingang 3 der nichtlinearen optischen Einrichtung 1 ist durch einen Lichtwellenleiter 12 mit einem Ausgang 7 einer Multiplexeinrichtung 8 verbunden, die ein optisches Multiplexsignal erzeugt. Die Multiplexeinrichtung 8 hat mehrere, z.B. 3, Eingänge 13, 14, 15; jeder Eingang 13, 14, 15 ist mit einer Lichtquelle 9, 10, 11 verbunden: Die Lichtquelle 9 ist mit dem Eingang 13, die Lichtquelle 10 ist mit dem Eingang 14 und die Lichtquelle 11 ist mit dem Eingang 15 der Multiplexeinrichtung 8 verbunden.

Die Lichtquellen 9, 10, 11 sind vorzugsweise Laser, die idealerweise monochromatisches Licht aussenden. Für dieses Anwendungsbeispiel sind die Lichtquellen 9, 10, 11 so gewählt, daß jede Lichtquelle 9, 10, 11 Licht einer einzigen Wellenlänge λ₉, λ₁₀, λ₁₁ aussendet, d.h. das Licht jeder Lichtquelle 9, 10, 11 hat eine andere Wellenlänge λ₉, λ₁₀, λ₁₁. Jedem Eingang 13, 14, 15 der Multiplexeinrichtung 8 wird somit Licht einer einzigen Wellenlänge λ₉, λ₁₀, λ₁₁ zugeführt. Prinzipiell ist es aber auch möglich, daß mehrere Lichtquellen 9, 10, 11 Licht der gleichen Wellenlänge aussenden.

Jede Lichtquelle 9, 10, 11 wird durch ein elektrisches Nachrichtensignal angesteuert, und zwar so, daß das von einer Lichtquelle 9, 10, 11 ausgesendete Licht z. B. ein optischer Puls einer bestimmten Impulsfolgefrequenz ist.

Der Multiplexeinrichtung 8 wird Licht von drei Lichtquellen 9, 10, 11 zugeführt, woraus die Multiplexeinrichtung 8 ein optisches Multiplexsignal bildet: Im optischen Multiplexsignal treten periodisch die Impulse der zugeführten optischen Pulse auf, d.h. z.B. ein Impuls der Wellenlänge λ₉ (Lichtquelle 9), ein Impuls der Wellenlänge λ₁₀ (Lichtquelle 10), ein Impuls der Wellenlänge λ₁₁ (Lichtquelle 11), ein Impuls der Wellenlänge λ₉ (Lichtquelle 9), u.s.w.. Die Multiplexeinrichtung 8 führt also zeitlich nacheinander Impulse unterschiedlicher Wellenlängen zusammen. Dieses Zusammenführen erfolgt z. B. durch einen wellenlängenselektiven Koppler, der hier drei Eingänge und einen Ausgang hat.

Ein solches optisches Multiplexsignal wird dem Eingang 3 der nichtlinearen optischen Einrichtung 1 zugeführt. Aus der nichtlinearen optischen Einrichtung 1 (Ausgänge 4 und 5) tritt ein optisches Multiplexsignal einer einzigen Wellenlänge, nämlich der ersten Wellenlänge λₛ aus.

Für die Ansteuerung der Lichtquellen 9, 10, 11 gibt es mehrere Möglichkeiten: Die Lichtquellen 9, 10, 11 können z. B. so angesteuert werden, daß die Pulse (allgemein: Impulsfolgen) eine feste Phase zueinander haben, so daß das oben beschriebene Zeitmultiplexsignal entsteht. Es ist aber auch möglich, daß die Ansteuerung der Lichtquellen 9, 10, 11 so erfolgt, daß zeitlich nacheinander immer nur eine einzige Lichtquelle 9, 10, 11 eine Anzahl von Impulsen aussendet. Eine weitere Möglichkeit zur Ansteuerung ist, daß die Multiplexeinrichtung 8 optische Speichereinrichtungen (z. B. optische Verzögerungsleitungen) hat, um einzelne Impulse, die der Multiplexeinrichtung 8 gleichzeitig zugeführt werden, kurzzeitig zu speichern. Auch dadurch kann ein optisches Multiplexsignal gebildet werden, bei dem zeitlich nacheinander Impulse unterschiedlicher Wellenlängen vorkommen.

Das beschriebene Multiplexsystem ist besonders vorteilhaft für optische Übertragungssysteme, bei denen Signale mit einer hohen Bitrate übertragen werden, und bei denen mehrere optische Sender (Laser) eingesetzt werden, um mehrere optische Signale zu erzeugen, die über einen gemeinsamen Lichtwellenleiter übertragen werden (Zeitmultiplex).

Dabei wird angestrebt, daß die Laser Licht einer gemeinsamen Wellenlänge aussenden, um zu erreichen, daß jedes optische Signal den gleichen Bedingungen (z.B. Dispersion) unterliegt.

Bei dem optischen Multiplexsystem werden die optischen Signale zunächst zu einem optischen Multiplexsignal (Licht mehrerer Wellenlängen) zusammengefaßt, um anschließend durch den in Fig. 1 gezeigten Wellenlängenwandler in Licht einer einzigen Wellenlänge gewandelt zu werden. Diese Wellenlänge ist an eine, sich dem Wellenlängenwandler anschließende Übertragungsstrecke (Lichtwellenleiter) optimal angepaßt. Dadurch werden Fluktuationen und Exemplarstreuungen der verschiedenen Laser ausgeglichen, so daß eine unterschiedliche Ausbreitung der optischen Impulse vermieden wird.

## Patentansprüche

1. Wellenlängenwandler, bei dem eine Lichtquelle (6) für Gleichlicht (GS) einer ersten Wellenlänge (λₛ) und eine nichtlineare optische Einrichtung (1) mit zwei Eingängen (2, 3) und mindestens einem Ausgang (4) vorhanden sind, und bei dem das Gleichlicht (GS) dem ersten Eingang (2) und ein Nachrichtensignal (NS) einer zweiten Wellenlänge (λₚ) dem zweiten Eingang (3) zuführbar ist, und bei dem die nichtlineare optische Einrichtung (1) durch die optische Leistung des Nachrichtensignals (NS) so steuerbar ist, daß Gleichlicht (GS) nur dann zum ersten Ausgang (4) gelangt, wenn die optische Leistung des Nachrichtensignals (NS) am zweiten Eingang (3) der nichtlinearen optischen Einrichtung (1) einen vorgegebenen Wert erreicht, **dadurch gekennzeichnet, dass** weitere Lichtquellen für Gleichlicht (GS) vorhanden sind, und dass Mittel vorhanden sind, die so steuerbar sind, dass zu einem bestimmten Zeitpunkt nur jeweils ein Gleichlicht (GS) zum ersten Eingang (2) der nichtlinearen optischen Einrichtung (1) gelangen kann.

2. Wellenlängenwandler nach Anspruch 1,
bei dem die nichtlineare optische Einrichtung (1) ein nichtlineares faseroptisches Mach-Zehnder-Interferometer ist.

3. Wellenlängenwandler nach Anspruch 1,
bei dem die nichtlineare optische Einrichtung (1) ein nichtlineares faseroptisches Ring-Interferometer ist.

4. Wellenlängenwandler nach Anspruch 1,
bei dem die nichtlineare optische Einrichtung (1) ein nichtlinearer faseroptischer Direktional-Koppler ist.

5. Wellenlängenwondler nach Anspruch 1,
bei dem die nichtlineare optische Einrichtung (1) ein Ring-Interferometer mit einem nichtlinearen Halbleiterelement ist.

## Claims

1. Wavelength converter, in which a light source (6) for steady light (GS) of a first wavelength (λₛ), and a nonlinear optical device (1) having two inputs (2, 3) and at least one output (4) are available, and in which the steady light (GS) can be supplied to the first input (2) and a communication signal (NS) of a second wavelength (λₚ) can be supplied to the second input (3), and in which the nonlinear optical device (1) can be controlled by the optical power of the communication signal (NS) in such a way that steady light (GS) only reaches the first output (4) if the optical power of the communication signal (NS) at the second input (3) of the nonlinear optical device (1) reaches a specified value, **characterized in that** further light sources for steady light (GS) are available and **in that** means are available that can be controlled in such a way that only one steady light (GS) in each case can reach the first input (2) of the nonlinear optical device (1) at a certain time instant.

2. Wavelength converter according to Claim 1, in which the nonlinear optical device (1) is a nonlinear fibre-optic Mach-Zehnder interferometer.

3. Wavelength converter according to Claim 1, in which the nonlinear optical device (1) is a nonlinear fibre-optic ring interferometer.

4. Wavelength converter according to Claim 1, in which the nonlinear optical device (1) is a nonlinear fibre-optic directional coupler.

5. Wavelength converter according to Claim 1, in which the nonlinear optical device (1) is a ring interferometer with a nonlinear semiconductor element.

## Revendications

1. Convertisseur de longueurs d'onde, où une source de lumière (6) pour de la lumière continue (GS) d'une première longueur d'onde (λ) et un dispositif optique non-linéaire (1) avec deux entrées (2,3) et au moins une sortie (4), où la lumière continue (GS) peut être amenée à la première entrée (2) et un signal d'information (NS) d'une deuxième longueur d'onde (λₚ) à une deuxième entrée (3), et où le dispositif optique non-linéaire (1) peut être commandé par la puissance optique du signal d'information (NS) de telle façon que la lumière continue (GS) n'arrive à la première sortie (4) que si la puissance optique du signal d'information (NS) atteint une valeur déterminée à la deuxième entrée (3) du dispositif optique non-linéaire (1), **caractérisé en ce que** d'autres sources de lumière pour de la lumière continue (GS) existent, et qu'il existe des moyens, qui peuvent être commandés de telle façon qu'à un moment donné, seule une lumière continue (GS) atteigne la première entrée (2) du dispositif optique non-linéaire (1).

2. Convertisseur de longueurs d'onde selon la revendication 1, où le dispositif optique non-linéaire (1) est un interféromètre Mach-Zehnder non-linéaire à fibre optique.

3. Convertisseur de longueurs d'onde selon la revendication 1, où le dispositif optique non-linéaire (1) est un interféromètre annulaire non-linéaire à fibre optique.

4. Convertisseur de longueurs d'onde selon la revendication 1, où le dispositif optique non-linéaire (1) est un coupleur directionnel non-linéaire à fibre optique.

5. Convertisseur de longueurs d'onde selon la revendication 1, où le dispositif optique non-linéaire (1) est un interféromètre annulaire avec un élément semi-conducteur non-linéaire.
